# FASCICULE DE BREVET EUROPEEN

(11) **EP 0 493 206 B1**
(45) Date de publication et mention de la délivrance du brevet: **07.09.1994**
(21) Numéro de dépôt: 91403451.7
(22) Date de dépôt: 19.12.1991
(51) Int. Cl.: B62D 11/18, B62D 7/08, B60K 17/34

(54) **Véhicule à direction mixte**
Fahrzeug mit Mischlenkung
Compound steering vehicle

(30) Priorité: 28.12.1990 FR 9016408
(43) Date de publication de la demande: 01.07.1992
(73) Titulaire: ETAT FRANCAIS Représenté par le délégué général pour l'armement, F-00460 Armées (FR)
(72) Inventeur: Denis, Daniel, F-49000 Angers (FR)

(56) Documents cités:
- EP-A- 0 248 582
- DE-A- 2 403 123
- DE-B- 1 956 243
- FR-A- 2 627 832
- GB-A- 1 225 006
- US-A- 1 815 839
- US-A- 4 420 991
- PATENT ABSTRACTS OF JAPAN vol. 7, no. 165 (M-230)(1310), 20 juillet 1983; & JP - A - 58071277 (KOMATSU ZOUKI) 27.04.1983

## Description

La présente invention concerne les véhicules motorisés comportant au moins quatre roues motrices et en particulier les véhicules dont la puissance est distribuée aux roues par côté comme c'est le cas pour la plupart des engins du type à chenilles.

L'invention concerne plus particulièrement un système de direction mixte adapté à ces véhicules.

Les véhicules à roues disposent de deux moyens pour modifier leur trajectoire.

Le premier moyen consiste à disposer selon le nombre d'essieux, d'un ou plusieurs essieux directeurs, c'est-à-dire qu'il est possible d'orienter, par un moyen approprié, les roues dites directrices, ce qui permet au véhicule de quitter la trajectoire rectiligne qu'il conserverait si les roues étaient fixes. Cette solution, bien connue, est adoptée pour tous les véhicules automobiles, légers ou lourds.

Le second moyen consiste à conserver les roues en position fixe et à faire varier la vitesse de rotation de celles qui sont situées d'un même côté du véhicule par rapport à celles qui sont situées de l'autre côté. De ce fait, le véhicule tourne du côté des roues qui sont ralenties ; si les roues sont immobilisées d'un côté, le véhicule tourne autour de son côté arrêté ; si le sens de rotation des roues est inversé entre un côté et le côté opposé, le véhicule tourne autour de son axe. Ce procédé de direction, bien connu sous le nom de "skid steering" est utilisé pour les véhicules chenillés ; il est aussi utilisé sur certains véhicules militaires à roues.

On connaît également le brevet US-A-1.815.839 (FERGUSON) qui décrit un mécanisme de propulsion d'engin à chenilles du type pelle mécanique se déplaçant à très faible vitesse et sur une très courte distance. Ce mécanisme utilise une direction du type "skid steering" pour faire tourner l'engin. Le rayon de virage est donné par un écart de vitesse entre le côté gauche et droit de l'engin ; cet écart étant obtenu en crabotant d'un côté le grand rapport et de l'autre côté le petit rapport d'une boîte de vitesses double à deux rapports qui distribue indépendamment de chaque côté de l'engin la puissance du moteur. Cet écart de vitesse étant unique et indépendant de la vitesse du moteur, pour améliorer le rayon de virage, on prévoit d'orienter les chenilles d'une ou des deux extrémités dans le sens du virage par l'intermédiaire des arbres de propulsion.

Ce mécanisme présente des inconvénients. Notamment l'orientation des chenilles qui est dépendante de la propulsion et de la cinématique du mode "skid steering", intervient uniquement pour faciliter le virage suivant ce mode de direction à faible vitesse.

De plus, cette configuration ne permet pas à l'engin de faire un pivot autour de son centre de gravité pour effectuer un demi-tour sur place.

Un autre inconvénient réside dans le fait que, cet engin ne disposant pas d'un différentiel entre les côtés gauche et droit, il n'est pas possible de le déplacer à grande vitesse sur route en utilisant uniquement l'orientation de ses chenilles.

La présente invention concerne un véhicule à roues qui peut changer de direction en orientant plus ou moins les roues directrices ou encore en gardant les roues en ligne mais en faisant varier la vitesse des roues situées d'un côté par rapport à la vitesse des roues situées de l'autre côté, ou enfin, en changeant l'orientation des roues directrices et en faisant varier simultanément la vitesse des roues d'un côté par rapport à l'autre côté.

L'orientation des roues directrices peut être obtenue indépendamment des moyens de propulsion et de ceux liés à la variation de la vitesse d'entraînement des roues motrices du véhicule.

Cette transmission permet de donner, au véhicule qui en est équipé, des caractéristiques de mobilité particulièrement performantes puisque celui-ci peut se déplacer à grande vitesse sur route comme un véhicule à roues directrices classiques et que, en déplacement en tout terrain ou pour des manoeuvres de parcage, il dispose de rayons de virage extrêmement faibles ; il peut même faire un demi-tour sur place.

Par ailleurs, le faible débattement angulaire des roues directrices permet de conserver une largeur de caisse entre roues très important, ce qui améliore notablement la capacité de transport du véhicule.

Le véhicule selon l'invention, motorisé avec au moins quatre roues motrices et du type à distribution de puissance par côté, comportant une direction mixte constituée d'un premier mode de direction comprenant des moyens d'orientation des roues d'au moins un essieu et d'un second mode de direction comprenant des moyens susceptibles d'établir une vitesse différente des roues par côté ; ce véhicule motorisé comporte un ensemble de moyens comportant un différentiel inter-côté interposé entre l'organe moteur, la distribution de puissance aux roues du côté droit, et la distribution de puissance aux roues du côté gauche du véhicule, cet ensemble de moyens permettant au conducteur de faire intervenir soit le premier soit le second soit l'ensemble des deux modes de direction, en fonction de l'un au moins des facteurs que sont la vitesse du véhicule et le terrain d'évolution, l'action d'activer ou de supprimer le second mode de direction pouvant être entièrement automatique.

Selon un mode préférentiel de réalisation, le mécanisme différentiel comportant un arbre neutre associé à des moyens de motorisation ; le véhicule comporte un dispositif d'accouplement débrayable, disposé entre l'arbre neutre et ses moyens de motorisation pour supprimer ou activer le second mode de direction selon la mobilité souhaitée (tout terrain, manoeuvres, grande vitesse sur route...).

Toujours selon l'invention, les moyens d'accouplement peuvent être divers : crabot, embrayage, distributeur, etc..., ils sont principalement fonction du choix de la source motrice de l'arbre neutre. L'action d'activer ou de supprimer le second mode de direction peut soit être laissée à l'initiative du conducteur, soit être entièrement automatique.

Selon une autre disposition de l'invention, les moyens de motorisation de l'arbre neutre sont constitués d'un moteur hydraulique alimenté au moyen d'une pompe à débit variable entraînée par l'organe moteur du véhicule.

Selon un mode préférentiel de réalisation, le véhicule comporte, disposé entre l'arbre neutre et ses moyens de motorisation, un organe d'accouplement du type distributeur hydraulique actionné à volonté par le conducteur ou automatisé, en fonction notamment de la vitesse du véhicule. Ce distributeur, commandé électriquement, peut prendre deux position ; la première position "circuit fermé" permet d'activer le second mode de direction ("skid steering"), la deuxième position reliant la branche haute pression à la branche basse pression de la pompe, associée à la mise à zéro de sa cylindrée, supprime le second mode de direction.

Selon une autre disposition de l'invention, la pompe à débit variable est asservie aux moyens d'orientation des roues de façon à réaliser une association des deux modes de direction en fonction de la vitesse du véhicule.

Toujours selon l'invention, les moyens d'orientation des roues consistent en un système de direction classique, dont le mouvement est limité pour provoquer un débattement des roues relativement réduit.

L'invention sera encore illustrée par la description suivante et les dessins annexés, donnés à titre indicatif, et dans lesquels :
- la figure 1 représente la cinématique d'un véhicule selon l'invention ;
- la figure 2 représente le mécanisme différentiel interposé entre l'organe moteur et la transmission de puissance aux roues ;

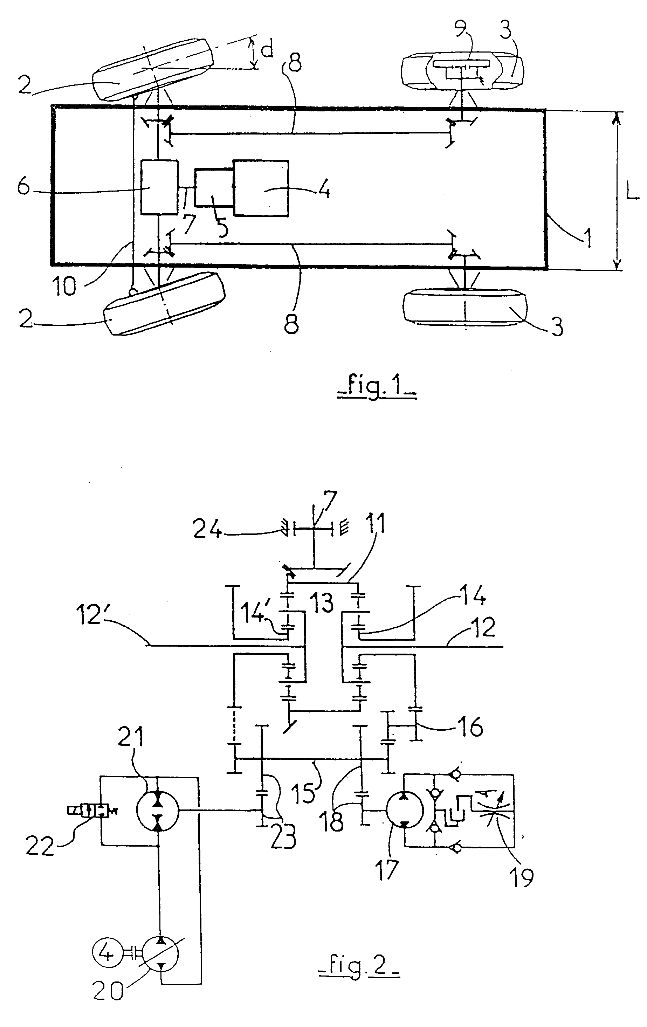

- la figure 2 représente la cinématique d'un véhicule selon un autre mode de réalisation ;

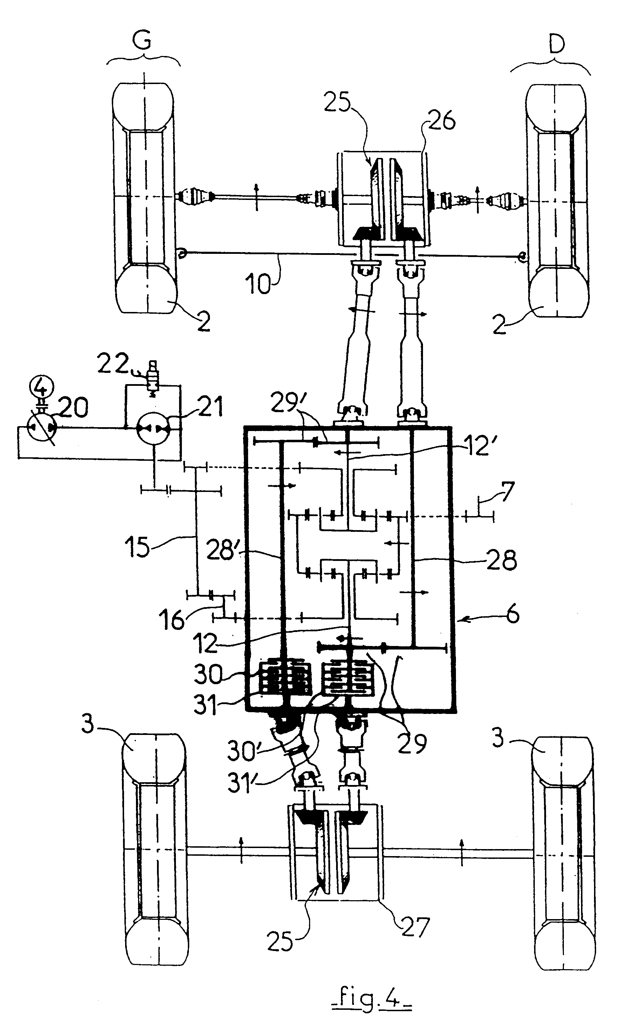

- la figure 4 représente un ensemble de moyens qui permet de motoriser ou de désolidariser une ou un ensemble de roues par côté ;

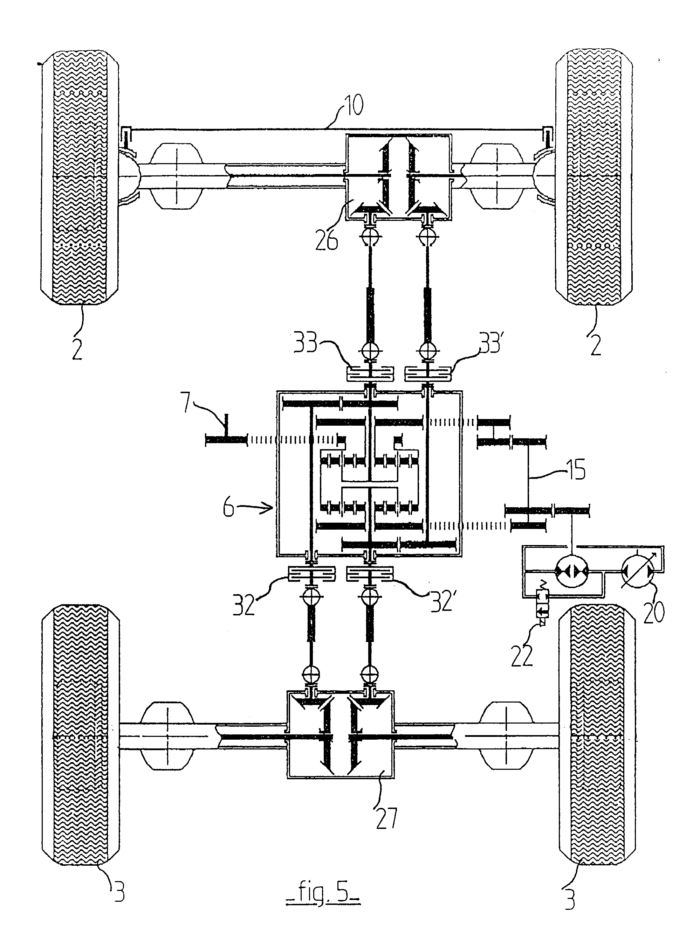

- la figure 5 représente un ensemble de moyens qui permet de motoriser ou de désolidariser les roues avant, ou arrière, ou l'ensemble des roues.

Le véhicule 1, représenté figure 1, est équipé d'un essieu à roues 2 directrices, disposé de préférence à l'avant, et d'un essieu de roues 3 fixes, disposé à l'arrière.

Le groupe motopropulseur du véhicule 1, est constitué d'un organe moteur 4 du genre moteur thermique, accouplé à une boîte de vitesse 5. La boîte de vitesse 5 est liée mécaniquement à un mécanisme différentiel 6 par le biais de l'arbre 7. Ce mécanisme différentiel, détaillé figure 2, est du type à superposition. Il assure une fonction classique de différentiel et, en plus, une fonction direction par "skid steering". La puissance est transmise aux roues avant 2 par le différentiel 6 et elle est également transmise aux roues arrière 3, au moyen d'arbres 8 disposés par côté.

On remarque que les roues 2 et 3 peuvent être équipées d'un train réducteur épicycloïdal 9 incorporé dans le moyeu.

Les roues avant 2 sont reliées entre elles par une barre de direction 10 commandée par un système classique de direction avec volant ou autre. Le débattement angulaire des roues 2 est limité. Ce débattement angulaire d peut être limité à la moitié de ce qui est habituellement admis (de l'ordre de 15 à 20°), par rapport à l'axe longitudinal du véhicule. Ce faible débattement angulaire permet de conserver une largeur de caisse L importante, au niveau de l'essieu directeur, ce qui améliore d'une façon sensible la capacité de transport du véhicule.

On a représenté, figure 2, en détail, le mécanisme différentiel 6. On remarque l'arbre 7 d'entrée de puissance. Cet arbre 7 entraîne la grande couronne 11 d'un double train épicycloïdal. Le mouvement est transmis à chaque demi-arbre de sortie 12, 12′, par l'intermédiaire de satellites 13 portés par ces derniers, et qui engrènent sur des pignons solaires 14, 14′ contrôlés au moyen d'un arbre neutre 15 et d'un pignon intermédiaire 16 qui sert d'inverseur de sens de rotation.

Un tel mécanisme différentiel s'apparente au mécanisme décrit dans le document FR 2.425.365 figure 5. Il est également décrit en détail dans le document FR 2.627.832. Le mécanisme représenté figure 2, comporte, comme dans le document précité, un dispositif de contrôle de l'écart de vitesse entre les demi-arbres 12, 12′. Ce mécanisme consiste essentiellement en une pompe hydraulique 17 reliée à l'arbre neutre 15 au moyen d'un couple de pignons 18. Cette pompe hydraulique 17 contrôle le glissement du différentiel au moyen d'un ajutage 19 à section variable.

Selon l'invention, le mécanisme différentiel comporte également des moyens qui constituent une commande de direction du genre "skid steering". Ces moyens consistent essentiellement en une pompe hydraulique 20 entraînée par l'organe moteur 4 par exemple. Cette pompe hydraulique 20 alimente dans les deux sens de rotation, un moteur hydraulique 21 qui est shunté par un distributeur 22. Ce distributeur 22 consiste en un distributeur à deux positions commandé électriquement ; la première position "circuit fermé permet d'activer le mode de direction par "skid steering", la deuxième position reliant la branche haute pression (HP) à la branche basse pression (BP) de la pompe, associée à la mise à zéro de sa cylindrée, supprime le mode de direction "skid steering". Ce moteur 21 est accouplé à l'arbre neutre 15 au moyen d'un couple de pignons 23.

Le véhicule peut être dirigé au moyen des seules roues directrices 2. Dans ce cas, le distributeur 22 court-circuite le moteur 21, la transmission hydrostatique est inactive. Le mouvement de la boîte de vitesse 5 est transmis aux roues droite et gauche du véhicule par les demi-arbres 12, 12′. Le véhicule se comporte comme un véhicule à roues classiques, munies d'un différentiel inter-côté. Ce différentiel, grâce au dispositif de contrôle de glissement, et en particulier à la pompe hydraulique 17 connectée à l'arbre neutre 15, permet de contrôler les couples sur les roues, par côté.

L'utilisation des roues directrices peut s'effectuer sur toute la plage de vitesse du véhicule, aussi bien les petites vitesses que les grandes vitesses.

Lorsque le véhicule est dirigé selon le mode "skid steering", dans certaines configurations d'emploi, comme par exemple en tout terrain, le distributeur 22 est positionné pour fermer le circuit hydraulique du moteur 21. L'action sur le volant de direction du véhicule, peut agir pour faire varier la cylindrée de la pompe hydraulique 20. Selon l'orientation du levier de variation de cylindrée de cette pompe 20, par rapport au point neutre, elle peut débiter par une sortie ou par l'autre, ce qui permet de faire tourner le moteur hydraulique 21 dans un sens ou dans l'autre. La rotation du moteur hydraulique 21, transmise à l'arbre neutre 15 permet, grâce au pignon intermédiaire 16, de motoriser les pignons solaires 14, 14′ avec des sens de rotation inversés. La vitesse de rotation sera ajoutée à l'un des demi-arbres de sortie et retranchée, d'une même valeur, à l'arbre de sortie opposé. La différence de vitesse de rotation entre les roues d'un côté du véhicule et celle des roues situées de l'autre côté, entraîne un changement de trajectoire du véhicule vers le côté où les roues tournent le moins vite.

On a représenté, figure 2, un frein 24 agissant sur l'arbre 7 disposé en sortie de la boîte de vitesse 5. Lorsque cette boîte de vitesse 5 est au point mort et que l'on serre le frein 24, le véhicule est immobile. La motorisation de l'arbre neutre 15 permet d'entraîner les demi-arbres 12, 12′, en sens inverse, de façon à obtenir un pivotement du véhicule sur son axe vertical central.

L'utilisation du mode "skid steering" peut être subordonnée à une plage de vitesse du véhicule allant de la vitesse nulle à 60 km/heure par exemple. Au-delà de cette vitesse, ce mode de direction est désaccouplé par l'ouverture du distributeur 22 ; le véhicule est alors dirigé au moyen du mode de direction par orientation des roues 2.

On peut également diriger le véhicule, à basse vitesse, au moyen d'une combinaison des deux modes de direction. On peut en effet ajouter à l'orientation des roues directrices 2, une variation de vitesse des roues intérieures par rapport aux roues extérieures, de façon à réduire le rayon de virage du véhicule.

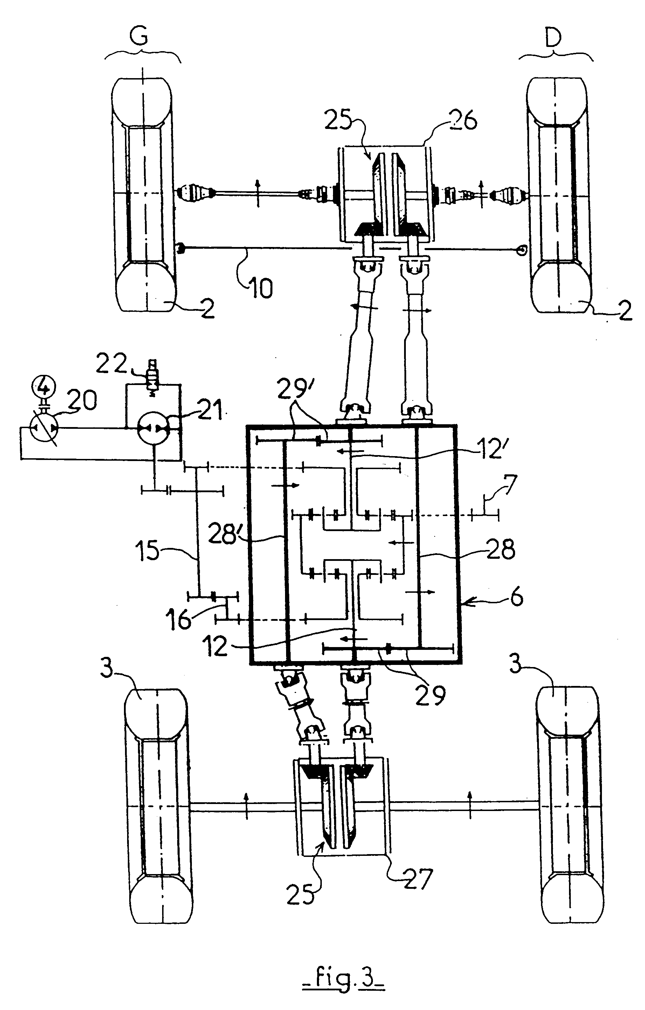

On a représenté, figure 3, un véhicule selon un second mode de réalisation. Le mécanisme différentiel 6 est disposé longitudinalement sur le véhicule et il conserve les mêmes fonctions. La transmission de puissance aux roues s'effectue, comme représenté figure 1, par côté, mais au moyen d'un système de transmission regroupé sur la ligne centrale du véhicule. Les demi-arbres 12, 12′ du mécanisme différentiel 6 transmettent la puissance aux côtés droit et gauche du véhicule, respectivement, au moyen de renvois d'angle 25 disposés dans les ponts avant 26 et arrière 27.

Le demi-arbre 12 qui, sur la figure, transmet la puissance à la roue arrière 3, côté droit, transmet également la puissance à la roue avant 2 côté droit, au moyen d'un arbre intermédiaire 28 et d'un couple de pignons inverseurs 29.

De la même façon, le demi-arbre 12′ qui transmet la puissance à la roue avant gauche 2, transmet également cette puissance à la roue arrière gauche 3, au moyen d'un arbre intermédiaire 28′ et d'un couple de pignons inverseurs 29′.

Les renvois d'angle 25, pour chaque roue, sont regroupés dans les ponts avant 26 et arrière 27, dos à dos.

On a représenté, figure 4, un véhicule selon le deuxième mode de réalisation mais équipé d'un ensemble de moyens qui permet une configuration toutes roues motrices (tout terrain) ou une configuration à un nombre limité de roues motrices (déplacement routier).

Avec ce système et pour les véhicules de plus de six roues, il n'est pas conseillé d'utiliser la propulsion intégrale quand l'adhérence est grande pour des vitesses élevées. En effet, les roues avant et arrière ne tournent habituellement à des vitesses rigoureusement égales que très rarement, en raison des irrégularités du sol. La liaison entre les roues serait à l'origine de glissement intempestifs des roues sur le sol et de couples supplémentaires non négligeables pour le dimensionnement des arbres.

La transmission de puissance aux roues s'effectue, comme représenté figure 1 ou 3, par côté, mais au moyen, pour certaines roues, d'un dispositif d'accouplement et de désaccouplement permettant un fonctionnement soit du type intégral, soit du type traction.

Ce dispositif pourrait être n'importe quel différentiel piloté ou non existant, mais selon un mode préférentiel de réalisation, ce dispositif est constitué d'un embrayage multidisques 30, 30′, et d'un viscocoupleur 31, 31′ montés en série.

Naturellement, pour un véhicule possédant un nombre élevé de roues, ce dispositif pourrait s'intercaler avantageusement entre un groupe de deux roues par côté.

Dès que l'on sélectionne le mode de direction "skid steering", les embrayages 30 et 30′ se commutent automatiquement pour obtenir une transmission toutes roues motrices. De même, lors de la sélection du mode "roues directrices" les embrayages 30 et 30′ s'ouvrent, les roues et arbres déconnectés tournent alors fou tant que l'adhérence est suffisante. Par contre, dès que l'adhérence est insuffisante, si les roues motrices patinent, le viscocoupleur applique un couple résistant aux roues motrices tandis qu'il applique un couple moteur (égal et opposé) aux roues libres. Tout se passe donc comme si le viscocoupleur transfère une partie du coupleur moteur des roues motrices vers les roues libres.

On a représenté, figure 5, un véhicule selon le second mode de réalisation mais équipé d'un dispositif d'accouplement et de désaccouplement permettant un fonctionnement soit du type traction, soit du type propulsion, soit du type intégral.

Selon un mode préférentiel de réalisation, ce dispositif d'accouplement et de désaccouplement est constitué de deux embrayages multidisques 32, 32′ et 33, 33′ respectivement placés sur les sorties arrière et avant du mécanisme différentiel 6.

Le fonctionnement de ce dispositif est simple. Il suffit d'agir sur l'embrayage 32, 32′ pour transmettre la puissance aux roues arrière seules (propulsion), alors qu'une même action sur l'embrayage 33, 33′ transmet uniquement la puissance aux roues avant (traction).

Il est également possible de rendre toutes les roues motrices en agissant simultanément sur les embrayages 32, 32′ et 33, 33′.

Selon ce dernier mode de réalisation, quand le conducteur sélectionne la direction de type "skid steering", les deux embrayages se commutent automatiquement pour l'obtention d'une transmission du type intégral.

Les signes de référence insérés après les caractéristiques techniques mentionnées dans les revendications ont pour seul but de faciliter la compréhension de ces dernières et n'en limitent aucunement la portée.

## Revendications

1. Véhicule motorisé (1) à au moins quatre roues motrices (2,3), du type à distribution de puissance par côté, comportant une direction mixte constituée d'un premier mode de direction comprenant des moyens d'orientation des roues (2) d'au moins un essieu et d'un second mode de direction comprenant des moyens susceptibles d'établir une vitesse différente des roues (2,3) par côté, véhicule motorisé caractérisé en ce qu'il comporte un ensemble de moyens comportant un différentiel inter-côté (6) interposé entre l'organe moteur (4), la distribution de puissance (12) aux roues (2,3) du côté droit, et la distribution de puissance (12') aux roues (2,3) du côté gauche du véhicule, cet ensemble de moyens permettant au conducteur de faire intervenir soit le premier soit le second soit l'ensemble des deux modes de direction, en fonction de l'un au moins des facteurs que sont la vitesse du véhicule et le terrain d'évolution, l'action d'activer ou de supprimer le second mode de direction pouvant être entièrement automatique.

2. Véhicule selon la revendication 1, le mécanisme différentiel (6) comportant un arbre neutre (15) associé à des moyens de motorisation, caractérisé en ce qu'il comporte un dispositif d'accouplement (22) débrayable, disposé entre l'arbre neutre (15) et ses moyens de motorisation.

3. Véhicule selon la revendication 2, caractérisé en ce que les moyens de motorisation de l'arbre neutre (15) sont constitués d'un moteur hydraulique (21) alimenté au moyen d'une pompe (20) à débit variable entraînée par l'organe moteur (4).

4. Véhicule selon la revendication 3, caractérisé en ce qu'il comporte, disposé entre l'arbre neutre (15) et ses moyens de motorisation, un organe d'accouplement du type distributeur hydraulique (22), actionné à volonté par le conducteur ou automatisé, en fonction notamment de la vitesse du véhicule.

5. Véhicule selon la revendication 4, caractérisé en ce qu'il comporte des moyens d'asservissement de la pompe (20) à débit variable, constitués par le système d'orientation des roues (2) du véhicule.

6. Véhicule selon l'une quelconque des revendications 1 à 5, caractérisé en ce que les moyens d'orientation des roues (2) consistent en un système de direction classique dont le mouvement est limité pour provoquer un débattement angulaire d des roues compris entre 15 et 20°.

7. Véhicule selon l'une quelconque des revendications 1 à 6, caractérisé en ce qu'il comporte un dispositif de contrôle du glissement du mécanisme différentiel inter-côté (6) constitué d'une pompe hydraulique (17) entraînée par l'arbre neutre (15) et dont le débit est contrôlé à l'aide d'un ajutage (19) à section variable.

8. Véhicule selon l'une quelconque des revendications 1 à 7, caractérisé en ce qu'il comporte, pour chacun des côtés droit et gauche du véhicule, un dispositif d'accouplement constitué d'un embrayage multidisques (30, 30') et/ou d'un visco-coupleur (31, 31'); chacun des deux dispositifs d'accouplement autorise, soit un écart de vitesse entre les roues avant et arrière d'un même côté droit ou gauche du véhicule sur sol adhérent, soit la solidarisation de celles-ci sur sol peu adhérent et lors de l'utilisation dudit second mode de direction.

9. Véhicule selon l'une quelconque des revendications 1 à 8, caractérisé en ce que ledit mécanisme différentiel (6), disposé au centre du véhicule, comporte deux demi-arbres de sortie (12, 12'), le premier demi-arbre (12) est dirigé vers l'arrière du véhicule et distribue la puissance du côté droit, le second (12') étant dirigé vers l'avant du véhicule et distribue la puissance du côté gauche.

10. Véhicule selon la revendication 9, caractérisé en ce que le premier demi-arbre (12) entraîne un arbre intermédiaire (28) au moyen d'un couple de pignons (29) pour transmettre la puissance au pont avant (26), le second demi-arbre (12') entraînant un autre arbre intermédiaire (28') au moyen d'un autre couple de pignons (29') pour transmettre la puissance au pont arrière (27).

11. Véhicule selon la revendication 9 ou 10, caractérisé en ce qu'il comporte, pour chacun des côtés droit et gauche du véhicule, un dispositif d'accouplement constitué de deux embrayages multidisques (32,32') et (33,33') pour transmettre la puissance, soit aux roues avant, soit aux roues arrière, soit à toutes les roues.

## Claims

1. Motorised vehicle (1) with at least four driving wheels (2, 3) of the type where power is transmitted separately to each side, comprising a mixed steering system consisting of a first steering mode comprising means of orientating the wheels (2) with at least one axle and a second steering mode comprising means capable of imparting a different speed to the wheels (2, 3) on each side, the said motorised vehicle being characterised in that it comprises a number of means comprising a differential between the sides (6) interposed between the engine (4), the power transmission (12) to the right-hand side wheels (2, 3), and the system transmitting power (12') to the wheels (2, 3) on the left-hand side of the vehicle, these means allowing the driver to switch in either the first or the second or both steering modes as a function of at least one of the factors of vehicle speed and terrain, it being possible for the second mode of steering to be actuated or disconnected entirely automatically.

2. Vehicle according to claim 1, the differential mechanism (6) comprising a neutral shaft (15) combined with a drive system, characterised in that it comprises a declutchable coupling device (22) positioned between the neutral shaft (15) and the drive system.

3. Vehicle according to claim 2, characterised in that the means of driving the neutral shaft (15) consist of a hydraulic motor (21) supplied from a variable flow pump (20) driven by the engine (4).

4. Vehicle according to claim 3, characterised in that it comprises, between the neutral shaft (15) and its drive system, a coupling of the hydraulic distributor type (22), operated as required by the driver, or automated as a function notably of vehicle speed.

5. Vehicle according to claim 4, characterised in that it comprises means of controlling the variable flow pump (20) consisting of the system of orientating the vehicle wheels (2).

6. Vehicle according to any of the claims 1 to 5, characterised in that the means of orientating the wheels (2) consist of a conventional steering system of which the movement is limited to give an angular deviation d of the wheels between 15 and 20°.

7. Vehicle according to any of the claims 1 to 6, characterised in that it comprises a device for controlling the slip of the differential mechanism between sides (6) consisting of a hydraulic pump (17) driven by the neutral shaft (15) and whose delivery is controlled by a variable section nozzle (19).

8. Vehicle according to any of the claims 1 to 7, characterised in that it comprises, for each of the right-hand and left-hand sides of the vehicle, a coupling device consisting of a multi-plate clutch (30, 31') and/or a torque converter (31, 31'); each of the two coupling devices can be used to produce either a difference in speed between the front and rear wheels on either the right-hand or left-hand side of the vehicle on ground giving good adhesion or to connect these together on ground of low adhesion and when the second mode of steering is used.

9. Vehicle according to any of the claims 1 to 8, characterised in that the said differential mechanism (6), positioned in the centre of the vehicle, comprises two output half-shafts (12, 12'), the first half-shaft (12) being directed to the rear of the vehicle and transmitting power to the right-hand side, the second (12') being directed to the front of the vehicle and transmitting power to the left-hand side.

10. Vehicle according to claim 9, characterised in that the first half-shaft (12) drives an intermediate shaft (28) by means of a pair of pinions (29) to transmit power to the front axle (26), the second half-shaft (12') driving another intermediate shaft (28') by means of another pair of pinions (29') to transmit power to the rear axle (27).

11. Vehicle according to claim 9 or 10, characterised in that it comprises, for each of the right-hand and left-hand sides of the vehicle, a coupling consisting of two multi-plate clutches (32, 32') and (33, 33') to transmit power either to the front wheels, or to the rear wheels, or to all the wheels.

## Patentansprüche

1. Motorisiertes Fahrzeug (1), mit mindestens vier Antriebsrädern (2,3) und mit pro Seite verteilter Leistung, mit außerdem einer gemischten Lenkung, bestehend aus einer ersten Lenkart mit Orientierungsmitteln der Räder (2) mindestens einer Achse und einer zweiten Lenkart mit Mitteln zur Herstellung einer unterschiedlichen Geschwindigkeit der Räder (2, 3) pro Seite, dadurch gekennzeichnet, daß es über eine Reihe von Mitteln verfügt, bestehend aus einem Differential (6) zwischen dem Antriebsorgan (4), der Leistungsverteilung (12) auf die Räder (2, 3) der rechten Seite und der Leistungsverteilung (12') auf die Räder (2, 3) der linken Seite des Fahrzeugs, wobei diese Mittel dem Fahrer ermöglichen, entweder die erste, oder die zweite oder beide Lenkarten anzuwenden, je nach zumindest einem der Faktoren, d.h. Geschwindigkeit des Fahrzeugs und Fahrgelände, wobei die Aktion, die zweite Lenkart zu aktivieren oder aufzuheben vollautomatisch erfolgen kann.

2. Fahrzeug nach Anspruch 1, bei dem das Differentialgetriebe (6) über eine neutrale Welle (15) verfügt, die mit Motorisierungsmitteln verbunden ist, dadurch gekennzeichnet, daß es eine Kupplungsvorrichtung (22) umfaßt, die zwischen der neutralen Welle (15) und ihren Motorisierungsmitteln angeordnet ist.

3. Fahrzeug nach Anspruch 2, dadurch gekennzeichnet, daß die Motorisierungsmittel der neutralen Welle (15) aus einem Hydraulikmotor 21), der mittels einer Pumpe (20) mit variabler Durchsatzleistung versorgt wird, die ihrerseits vom Antriebsorgan (4) angetrieben wird, bestehen.

4. Fahrzeug nach Anspruch 3, dadurch gekennzeichnet, daß es zwischen seiner neutralen Welle (15) und seinen Motorisierungsmitteln ein Kupplungsorgan vom Typ Hydraulikverteiler (22) aufweist, das entweder vom Bediener oder automatisch betätigt wird, insbesondere je nach Geschwindigkeit des Fahrzeugs.

5. Fahrzeug nach Anspruch 4, dadurch gekennzeichnet, daß es Regelungsmittel der Pumpe (20) mit variabler Durchsatzleistung aufweist, die aus dem Orientierungssystem der Räder (2) des Fahrzeugs bestehen.

6. Fahrzeug nach einem der Ansprüche 1 bis 5, dadurch gekennzeichnet, daß die Orientierungsmittel der Räder (2) aus einem herkömmlichen Lenksystem bestehen, deren Bewegung begrenzt ist, um den Winkelausschlag d der Räder zwischen 15 und 20° zu verursachen.

7. Fahrzeug nach einem der Ansprüche 1 bis, 6, dadurch gekennzeichnet, daß es eine Schlupfkontrollvorrichtung des Differentialgetriebes (6) umfaßt, bestehend aus einer von der neutralen Welle (15) angetriebenen Hydraulikpumpe (17), deren Durchsatzleistung mittels eines Ansatzes (19) mit variablem Querschnitt gesteuert wird.

8. Fahrzeug nach einem der Ansprüche 1 bis 7, dadurch gekennzeichnet, daß es jeweils für die rechte und die linke Seite des Fahrzeugs über eine Kupplungsvorrichtung verfügt, die aus einer Mehrscheibenkupplung (30, 30') und/oder einem Viskokoppler (31, 31') besteht; jede der beiden Kupplungsvorrichtungen ermöglicht entweder einen Geschwindigkeitsunterschied zwischen den Vorder- und Hinterrädern einer gleichen rechten oder linken Seite des auf dem Boden haftenden Fahrzeugs, oder die Solidarisierung derselben auf einem wenig haftenden Boden und bei Verwendung der besagten zweiten Lenkart.

9. Fahrzeug nach einem der Ansprüche 1 bis 8, dadurch gekennzeichnet, daß das besagte, in der Fahrzeugmitte angeordnete Differentialgetriebe (6) zwei Ausgangshalbwelle (12, 12') umfaßt, wobei die erste Halbwelle (12) nach Hinten des Fahrzeugs gerichtet ist und die Leistung auf der rechten Seite verteilt, und die zweite (12') nach vorne des Fahrzeugs gerichtet ist und die Leistung auf der linken Seite verteilt.

10. Fahrzeug nach Anspruch 9, dadurch gekennzeichnet, daß die erste Halbwelle (12) mittels eines Ritzelpaares (29) eine Zwischenwelle (28) antreibt, um die Leistung auf die vordere Brücke (26) zu übertragen, während die zweite Halbwelle (12') mittels eines anderen Ritzelpaares (29') eine andere Zwischenwelle (28') antreibt, um die Leistung auf die hintere Brücke (27) zu übertragen.

11. Fahrzeug nach Anspruch 9 oder 10, dadurch gekennzeichnet, daß es jeweils für die rechte und linke Seite des Fahrzeugs eine Kupplungsvorrichtung umfaßt, die aus zwei Mehrscheibenkupplungen (32, 32') und (33, 33') besteht, um die Leistung entweder auf die Vorderräder, die Hinterräder oder auf alle Räder zu übertragen.
